# EUROPÄISCHE PATENTSCHRIFT

(11) **EP 3 332 995 B1**
(45) Veröffentlichungstag und Bekanntmachung des Hinweises auf die Patenterteilung: **17.06.2020**
(21) Anmeldenummer: 17205862.0
(22) Anmeldetag: 07.12.2017
(51) Int. Cl.: B60D 1/145, B60D 1/44, B60D 1/46, B60D 1/62

(54) **ZUGDEICHSEL FÜR EINEN FAHRZEUGANHÄNGER**
DRAW-BAR FOR A VEHICLE TRAILER
FLÈCHE D'ATTELAGE POUR UNE REMORQUE DE VÉHICULE

(30) Priorität: 09.12.2016 DE 102016123983
(43) Veröffentlichungstag der Anmeldung: 13.06.2018
(73) Patentinhaber: MÜNZ-Fahrzeugbau GmbH & Co. KG, 72124 Pliezhausen (DE)
(72) Erfinder: Bayha, Steffen, 72124 Pliezhausen (DE); Bayha, Helmut, 72124 Pliezhausen (DE)
(74) Vertreter: Kohler Schmid Möbus Patentanwälte

(56) Entgegenhaltungen:
- DE-A1- 3 934 121
- DE-A1-102014 112 109
- DE-U- 1 926 080
- US-A- 4 832 358
- US-A- 5 765 850

## Beschreibung

Die Erfindung betrifft eine Zugdeichsel für einen Fahrzeuganhänger mit den Merkmalen des Oberbegriffs des Patentanspruchs 1.

Üblicherweise werden Fahrzeuganhänger über eine Zugöse oder einen Kopplungskopf an ein Zugfahrzeug angehängt. Dazu befindet sich auf der Seite des Zugfahrzeugs eine Anhängevorrichtung. Um den Fahrzeuganhänger ordnungsgemäß an die Anhängevorrichtung ankoppeln zu können, sollte die Zugöse bzw. der Kopplungskopf abgestimmt auf das Zugfahrzeug am Fahrzeuganhänger angeordnet sein.

Jedoch sind unterschiedliche Ausgestaltungen und Positionierungen von Anhängervorrichtungen an Zugfahrzeugen üblich. Daher kann in der Regel ein Fahrzeuganhänger nur jeweils mit einem bestimmten Zugfahrzeugtyp oder zumindest mit nur einem bestimmten Anhängevorrichtungstyp verwendet werden.

Wünschenswert ist, auch den Abstand zwischen dem Fahrzeuganhänger und dem Zugfahrzeug, insbesondere in angekoppeltem Zustand, anpassen zu können.

Aus der DE 10 2015 120 812 A1 ist eine längenveränderbare Zugdeichsel bekannt. Diese kann jedoch nur mit einer Anhängevorrichtung bzw. einem Zugfahrzeug verwendet werden, bei dem die Höhenlage von vornherein auf die Zugdeichsel korrekt abgestimmt ist.

Aus der Gebrauchsmusterschrift DE 19 26 080 U ist eine Vorrichtung zur verstellbaren Anbringung von Zugdeichseln an Anhängewagen und -geräten bekannt.

Die Offenlegungsschrift DE 39 34 121 A1 beschreibt eine gekröpfte Zuggabel für mehrachsige, drehschemelgelenkte Anhängerfahrzeuge.

Aus der US 5,765,850 A ist ferner eine Fahrzeugkopplungsanordnung zur Kopplung eines Fahrzeuganhängers mit einem Zugfahrzeug bekannt.

Eine Zugdeichsel für einen Anhänger ist in in der DE 10 2014 112 109 A1 beschrieben.

Ein Adapter zur Anpassung eines Anhängers bzw. einer Zugdeichsel an eine Anhängerkupplung ist in der US 4,832,358 A dargestellt.

Aufgabe der vorliegenden Erfindung ist es daher, eine gattungsgemäße Zugdeichsel anzubieten, die besonders flexibel für unterschiedliche Anhängevorrichtungen, beispielsweise unterschiedlicher Zugfahrzeuge, genutzt werden kann.

Gelöst wird diese Aufgabe durch eine Zugdeichsel für einen Fahrzeuganhänger mit den Merkmalen des Patentanspruchs 1.

Dazu kann die Fahrzeugkopplungsanordnung höhenverstellbar am Deichselkörper festlegbar sein, d. h. in unterschiedlichen Höhenpositionen bezüglich des Deichselkörpers am Deichselkörper festlegbar sein. Somit kann die Lage bzw. Position der Fahrzeugkopplungsanordnung auf eine Anhängevorrichtung eines Zugfahrzeugs in Bezug auf ihre Höhenlage eingestellt bzw. auf diese abgestimmt werden. Somit kann ein und derselbe Fahrzeuganhänger auch mit unterschiedlichen Zugfahrzeugen genutzt werden, selbst wenn die Anhängevorrichtung der Zugfahrzeuge jeweils unterschiedlich hoch, d. h. mit unterschiedlichem Bodenabstand, am Zugfahrzeug positioniert sind.

Am Deichselkörper ist eine Höhenverstelleinrichtung zur Höheneinstellung der Fahrzeugkopplungsanordnung relativ zu einem Anhängerrahmen angeordnet. Die Höhenverstelleinrichtung kann im Wesentlichen horizontal oder vertikal ausgerichtet sein. Sie kann manuell betätigbar und/oder motorbetrieben sein. Insbesondere kann die Höhenverstelleinrichtung als Spindel-Höhenverstellung ausgebildet sein, d. h. über einen Spindeltrieb wirken. Auch kann die Höhenverstelleinrichtung hydraulisch betätigbar ausgebildet sein. Eine solche Höhenverstelleinrichtung ermöglicht es, den Deichselkörper relativ zum Anhängerrahmen auszurichten. Somit besteht eine weitere Möglichkeit, die Lage des Deichselkörpers und damit auch die Lage der Fahrzeugkopplungsanordnung einzustellen bzw. an beispielsweise ein Zugfahrzeug und dessen Anhängevorrichtung anzupassen.

Eine besonders vorteilhafte Weiterbildung ergibt sich, wenn die Fahrzeugkopplungsanordnung längenverstellbar an dem Deichselkörper festlegbar ist. Somit kann die Fahrzeugkopplungsanordnung nicht nur in der Höhe, sondern auch in der Länge verstellt werden. Dabei ist unter längenverstellbar zu verstehen, dass die Lage bzw. Position der Fahrzeugkopplungsanordnung in Längsrichtung des Deichselkörpers verstellbar ist. Dadurch, dass die Länge der Deichsel einstellbar ist, kann der Abstand von Zugfahrzeug zur Ladefläche des Anhängers eingestellt werden. Insbesondere kann dadurch eine Länge eingestellt werden, die es erlaubt, den Abstand von Anhänger zu Zugfahrzeug mit Überfahrrampe zu überbrücken, sodass ein zu transportierendes Fahrzeug vom Anhänger auf das Zugfahrzeug fahren kann.

Die Fahrzeugkopplungsanordnung weist einen Verbindungsabschnitt, der an dem Deichselkörper festlegbar ist, und einen Kopplungsabschnitt auf. Somit kann die Fahrzeugkopplungsanordnung durch den Verbindungs- und den Kopplungsabschnitt gebildet werden. Dies ermöglicht zudem eine modulare Herstellung der Zugdeichsel. Beispielsweise ist es denkbar, verschiedenartige Kopplungsabschnitte, die zur Festlegung an ein und demselben Verbindungsabschnitt vorgesehen sind, mit diesem Verbindungsabschnitt wahlweise zu nutzen. Somit kann beispielsweise je nach Zugfahrzeug zwischen einem Kopplungsabschnitt mit Zugöse und einem Kopplungsabschnitt mit Kopplungskopf gewechselt werden. Auch ist es denkbar, unterschiedliche Verbindungsabschnitte, beispielsweise mit unterschiedlichen Wandstärken bzw. ausgelegt für unterschiedliche Gewichtsklassen der Fahrzeuganhänger, vorzusehen. Somit kann ein Fahrzeuganhängermodell besonders flexibel an unterschiedliche Zugfahrzeuge angepasst werden. Auch kann somit ein Deichselkörpermodell zur Herstellung verschiedenartiger Fahrzeuganhängermodelle genutzt werden.

Insbesondere kann vorgesehen werden, dass der Kopplungsabschnitt höhen- und/oder längenverstellbar an dem Verbindungabschnitt festlegbar, vorzugsweise lösbar festlegbar, ist. Unter "lösbar" ist im Sinne der Erfindung keine "Lockerung" der Verbindung bzw. Festlegung, sondern eine Trennung zu verstehen.

Besonders vorteilhaft ist es, wenn der Kopplungsabschnitt eine Wendeöse aufweist. Beispielsweise kann die Wendeöse einenends eine Zugöse und anderenends einen Kopplungskopf aufweisen. Dann kann je nach Zugfahrzeug bzw. Anhängevorrichtung des Zugfahrzeugs die jeweils geeignete Kopplungsanordnung, d. h. die Zugöse oder der Kopplungskopf, ausgewählt werden.

Auch kann vorgesehen sein, dass der Verbindungsabschnitt eine Kröpfung aufweist. Oftmals liegt der Deichselkörper in seiner Normallage wesentlich tiefer als die Anhängevorrichtung des Zugfahrzeugs. Dann kann über die Kröpfung des Verbindungsabschnitts der Kopplungsabschnitt (beispielsweise grob) im zu erwartenden Bereich bzw. auf Höhe der Anhängevorrichtung des Zugfahrzeugs vorab positioniert werden. Es können auch unterschiedliche Verbindungsabschnitte vorgesehen sein, die jeweils ein unterschiedliches Kröpfungsausmaß aufweisen. Beispielsweise ist es auch denkbar, einen Verbindungsabschnitt mit in Einbaulage nach unten weisender Kröpfung vorzusehen.

Der Kopplungsabschnitt kann auch eine Kugelkupplung aufweisen. Insbesondere kann dazu eine nach unten weisende Kröpfung des Verbindungsabschnitts vorgesehen sein.

Besonders vorteilhaft ist es, wenn der Kopplungsabschnitt am Verbindungsabschnitt und/oder der Verbindungsabschnitt am Deichselkörper über jeweils ein Lochbild festlegbar sind. Lochbilder ermöglichen eine besonders einfach lösbare Festlegung eines Elements an einem anderen Element. Dabei ist es denkbar, dass wenigstens ein Lochbild in seiner Einbaulage wenigstens zwei zueinander vertikal versetzte Löcher aufweist. Da die zwei Löcher zueinander vertikal versetzt sind, kann dadurch die Fahrzeugkopplungsanordnung auf besonders einfache Weise höhenverstellbar am Deichselkörper festgelegt werden.

Der Deichselkörper kann als längsseitig abgekantetes Blechteil mit einem, vorzugsweise unterseitigen, Längsschlitz ausgebildet sein. Vorzugsweise kann das Blechteil wenigstens zweifach, besonders bevorzugt sechsfach, abgekantet sein. Somit kann bei der Herstellung des Deichselkörpers auf ein kostenaufwendiges Schweißen weitgehend oder sogar vollständig verzichtet werden. Durch die Abkantung bzw. die Abkantungen lässt sich die Stabilität des Deichselkörpers wesentlich verbessern. Durch den Längsschlitz bleibt der Innenbereich der Zugdeichsel dabei weiterhin erreichbar. Der Deichselkörper kann im Querschnitt im Wesentlichen C-förmig ausgebildet sein.

Auch kann der Deichselkörper zumindest abschnittsweise als Rohr, vorzugsweise als im Querschnitt polygonales, insbesondere viereckiges Rohr, ausgebildet sein.

Auch kann vorgesehen sein, dass sich der Deichselkörper entlang seiner Längsrichtung zumindest in einem Abschnitt, vorzugsweise von der Fahrzeugkopplungsanordnung weg gerichtet, verjüngt. Dadurch kann einerseits eine hinreichend hohe Stabilität des Deichselkörpers erreicht werden, andererseits kann der Materialverbrauch auf ein notwendiges Maß beschränkt werden. Somit ergeben sich besondere Vorteile hinsichtlich Gewicht und/oder Herstellungskosten der Zugdeichsel.

Der Deichselkörper selbst kann ungekröpft, d. h. im Wesentlichen geradlinig, ausgebildet sein. Da ein solcher Deichselkörper in Verbindung mit entsprechenden Verbindungsabschnitten sowohl zum Aufbau ungekröpfter als auch gekröpfter Zugdeichseln verwendet werden kann, kann somit die Modularität des Aufbaus der Zugdeichsel verbessert werden. Auch können Schweißungen zur Herstellung einer Kröpfung entfallen.

Die Stabilität der Zugdeichsel, insbesondere des Verbindungsabschnitts, kann verbessert werden, wenn der Verbindungsabschnitt wenigstens ein, vorzugsweise angeschweißtes, angeflanschtes und/oder abgekantetes, Verstärkungselement aufweist.

Es ist denkbar, dass der Deichselkörper an dem der Fahrzeugkopplungsanordnung abgewandten Ende einen Zugdeichselanbindungsabschnitt zur Anbindung des Anhängerrahmens an den Deichselkörper aufweist. Der Zugdeichselanbindungsabschnitt kann, beispielsweise mittels eines Lochbildes, in unterschiedlichen Positionen mit dem Deichselkörper und/oder mit dem Anhängerrahmen verbindbar sein. Dadurch kann auch der Zugdeichselanbindungsabschnitt relativ zum Anhängerrahmen höhenverstellbar sein. Der Zugdeichselanbindungsabschnitt kann eine Silentbuchse aufweisen. Die Länge der Silentbuchse kann bei besonders bevorzugten Ausführungsformen der Erfindung im Bereich von 90 bis 110 mm, vorzugweise 100 mm, oder im Bereich von ca. 180 bis 220 mm, vorzugsweise 200 mm, gewählt sein. Durch Verwendung einer derartigen Silentbuchse kann der Anhängerrahmen besonders wartungsarm am Deichselkörper angebunden sein. Die Silentbuchse kann mittels wenigstens zweier zueinander winklig, vorzugsweise rechtwinklig, angeordneter Halteplatten und/oder -vorsprüngen am Zugdeichselanbindungsabschnitt festgelegt sein. Dadurch kann die Silentbuchse mehr- bzw. allseitig gegen auf sie, beispielsweise während einer Fahrt mit dem Fahrzeuganhänger, einwirkende Querkräfte abgestützt werden.

Es kann vorgesehen sein, dass am Deichselkörper eine Stützfußhalterung vorgesehen, vorzugweise angeflanscht, ist. An der Stützfußhalterung kann ein Stützfuß angeordnet sein, mit dem der Deichselkörper und damit der Fahrzeuganhänger am Boden abgestützt werden kann.

Die Stützfußhalterung und/oder die Höhenverstelleinrichtung können am Deichselkörper, insbesondere horizontal, d. h. entlang des Deichselkörpers, verlagerbar und/oder auswählbar an mehreren Positionen am Deichselkörper anordenbar sein.

Die Höhenverstelleinrichtung kann dazu mittels wenigstens eines Lochbildes am Deichselkörper anflanschbar sein. Zur Sicherung kann eine Bolzensicherung am Lochbild vorgesehen sein. Dadurch kann die Zugdeichsel noch flexibler auf unterschiedliche Anhängerrahmen anpassbar sein.

Im Innenraum des Deichselkörpers können weitere funktionelle Elemente des Fahrzeuganhängers angeordnet bzw. verstaut werden. Insbesondere können im Deichselkörper wenigstens eine Versorgungsleitung, beispielsweise eine Druckluftleitung, eine Hydraulikleitung, eine Stromleitung, und/oder wenigstens ein Drucklufttank angeordnet sein. Somit können diese funktionellen Elemente platzsparend und beispielsweise vor Umwelteinflüssen geschützt angeordnet sein. Im oder am Deichselkörper kann auch eine Hydrauliksteuerung angeordnet sein. Die Hydrauliksteuerung kann beispielsweise über, vorzugsweise ebenfalls im Deichselkörper angeordnete Hydraulikleitungen, die für diesen Fall vorzugsweise hydraulisch betätigbare Höhenverstelleinrichtung betätigen bzw. steuern.

Weitere Merkmale und Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein. In der schematischen Zeichnung ist ein Ausführungsbeispiel der Erfindung dargestellt und wird in der nachfolgenden Beschreibung näher erläutert.

Es zeigen:
- Fig. 1: eine erste Zugdeichsel;
- Fig. 2: einen Querschnitt durch den Deichselkörper der Zugdeichsel aus Fig. 1;
- Fig. 3a: eine zweite Zugdeichsel mit einer ersten Fahrzeugkopplungsanordnung und einer horizontal angeordneten Höhenverstelleinrichtung;
- Fig. 3b: eine Detailansicht der Fahrzeugkopplungsanordnung der Fig. 3a;
- Fig. 4: eine weitere Zugdeichsel mit vertikal ausgerichteter Höhenverstelleinrichtung;
- Fig. 5: eine weitere Zugdeichsel mit hydraulischer Höhenverstelleinrichtung;
- Fig. 6: einen Zugdeichselanbindungsabschnitt mit Silentbuchse;
- Fig. 7: einen alternativ ausgebildeten Zugdeichselanbindungsabschnitt mit alternativ ausgebildeter Silentbuchse und
- Fig. 8a bis 8c: verschiedene perspektivische Ansichten einer alternativen Fahrzeugkopplungsanordnung mit Wendeöse.

Zur Erleichterung des Verständnisses der Erfindung sind soweit möglich funktionell äquivalente Elemente jeweils mit den gleichen Bezugsziffern, gegebenenfalls ergänzt um Apostrophe, bezeichnet.

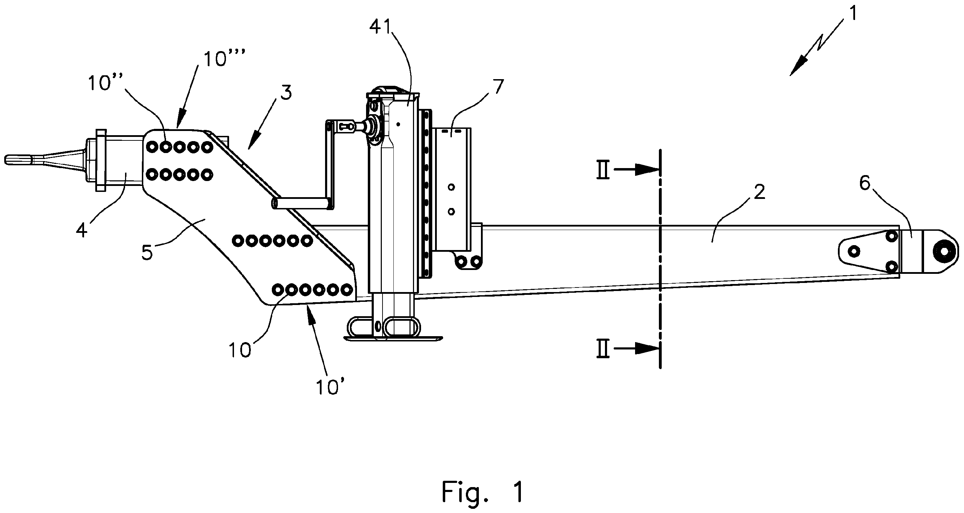

Die Fig. 1 zeigt ein erstes Ausführungsbeispiel einer erfindungsgemäßen Zugdeichsel 1. Zu erkennen ist ein Deichselkörper 2 mit einer Fahrzeugkopplungsanordnung 3, einem Zugdeichselanbindungsabschnitt 6 und einer Stützfußhalterung 7 mit einem Stützfuß 41.

Die Zugdeichsel 1 kann über die Stützfußhalterung 7 und den Stützfuß 41 zum Boden hin abgestützt werden. Soll beispielsweise der Fahrzeuganhänger ohne Zugfahrzeug geparkt werden, so kann der Stützfuß 41 so weit ausgefahren werden, bis die Zugdeichsel 1 in etwa waagerecht am Boden abgestützt ist.

Zu erkennen ist insbesondere, dass sich der Deichselkörper 2 entlang seiner Längsrichtung von der Fahrzeugkopplungsanordnung 3 weggerichtet in Richtung auf den Zugdeichselanbindungsabschnitt 6 hin verjüngt. Insbesondere weist der Deichselkörper im Bereich der Fahrzeugkopplungsanordnung 3 eine größere Höhe auf als im Bereich des Zugdeichselabschnitts 6.

Die Fahrzeugkopplungsanordnung 3 weist einen Kopplungsabschnitt 4 und einen Verbindungsabschnitt 5 auf. Mittels des Kopplungsabschnitts 4 kann die Fahrzeugkopplungsanordnung 3 bzw. die Zugdeichsel 1 an einem in der Fig. 1 nicht näher dargestellten Zugfahrzeug angekoppelt werden.

Die Fahrzeugkopplungsanordnung 3 ist lösbar am Deichselkörper 2 festgelegt. Dazu weist der Verbindungsabschnitt 5 ein Lochbild 10 und der Deichselkörper 2 ein auf das Lochbild 10 abgestimmtes Lochbild 10' (in Fig. 1 verdeckt durch das Lochbild 10) auf. Die Lochbilder 10, 10' weisen in diesem Ausführungsbeispiel zwei übereinanderliegende Lochreihen auf. Somit weisen die Lochbilder 10, 10' in ihrer Einbaulage wenigstens zwei zueinander vertikal versetzte Löcher auf. Somit kann der Verbindungsabschnitt 5 beispielsweise über Bolzen oder Schrauben in wenigstens zwei verschiedenen vertikalen Positionen am Deichselkörper 2 festgelegt bzw. angeflanscht werden. Dadurch ist die Fahrzeugkopplungsanordnung 3 mittels der Lochbilder 10, 10' höhenverstellbar am Deichselkörper 2 festlegbar. Jede der beiden Lochreihen der Lochbilder 10, 10' weisen eine Vielzahl von Löchern, in diesem Ausführungsbeispiel jeweils sechs Löcher, auf. Somit kann der Verbindungsabschnitt 5 zusätzlich in Längsrichtung des Deichselkörpers 2 einstellbar am Deichselkörper 2 festgelegt werden. Mit anderen Worten ist die Fahrzeugkopplungsanordnung 3 auch längenverstellbar am Deichselkörper 2 festlegbar.

Um die Modularität des Aufbaus der Zugdeichsel 1 noch weiter zu verbessern, ist der Verbindungsabschnitt 5 in diesem Ausführungsbeispiel aus zwei spiegelbildlich zueinander geformten Platten gebildet, die beidseits des Deichselkörpers 2 festgelegt werden.

In analoger Weise ist der Kopplungsabschnitt 4 über ein Lochbild 10'" und einem Lochbild 10" des Verbindungsabschnitts 5 mittels beispielweise Bolzen oder Schrauben am Verbindungsabschnitt 5 festlegbar. Auch die Lochbilder 10", 10"' weisen mehrere vertikal angeordnete Reihen von Löchern auf, wobei jede der Reihen ebenfalls mehrere Löcher, in diesem Ausführungsbeispiel wenigstens fünf Löcher je Reihe, aufweisen. Somit ist der Kopplungsabschnitt 4 zusätzlich höhen- und längenverstellbar am Verbindungsabschnitt 5 festlegbar.

Durch Verwendung von Schrauben zur Festlegung des Kopplungsabschnitts 4 am Verbindungsabschnitt 5 bzw. des Verbindungsabschnitts 5 am Deichselkörper 2 sind die Elemente 4 bzw. 5 jeweils lösbar am jeweiligen anderen Element 5 bzw. 2 festlegbar.

Um nun die Zugdeichsel 1 bzw. einen mit einer Zugdeichsel 1 aufgebauten Fahrzeuganhänger an ein Zugfahrzeug bzw. dessen Anhängevorrichtung anzupassen, können somit die Verschraubungen der Lochbilder 10", 10'" und/oder der Lochbilder 10, 10' zunächst gelöst, die Kopplungseinheit 4 und/oder der Verbindungsabschnitt 5 in der Höhe bzw. in der Länge, d. h. parallel zur Längsrichtung des Deichselkörpers 2, repositioniert und anschließend die Kopplungseinheit 4, der Verbindungsabschnitt 5 und der Deichselkörper 2 mittels Verschraubung wieder festgelegt werden.

Ferner ist der Fig. 1 zu entnehmen, dass der Verbindungsabschnitt 5 eine nach oben weisende Kröpfung aufweist. Diese dient zur groben Vorabeinstellung des Kopplungsabschnitts 4 auf eine zu erwartende Höhe des Zugfahrzeuges bzw. seiner Anhängevorrichtung.

Auch ist der Fig. 1 zu entnehmen, dass der Deichselkörper 2 in diesem Ausführungsbeispiel ungekröpft, d. h. im Wesentlichen geradlinig, ausgebildet ist.

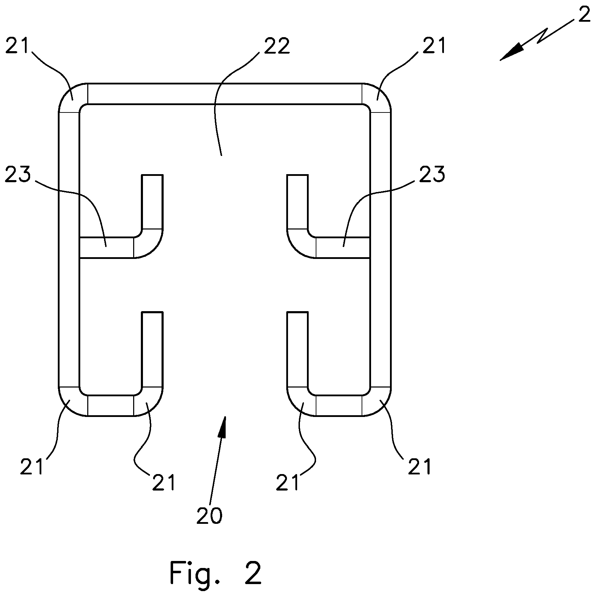

Die Fig. 2 zeigt nun einen Querschnitt des Deichselkörpers 2 gemäß der Schnittlinie II-II (Fig. 1).

In diesem Ausführungsbeispiel ist der Deichselkörper 2 als längsseitig abgekantetes Blechteil mit einem unterseitigen Längsschlitz 20 ausgebildet. Dazu ist das Blechteil entlang von sechs Abkantungen 21 zu dem im Querschnitt näherungsweise C-förmigen Deichselkörper 2 abgekantet. Somit ergibt sich ein hohler Innenbereich 22 des Deichselkörpers 2. Im Innenbereich 22 sind Halterungen 23 seitlich am Deichselkörper 2 montiert. Die Halterungen 23 dienen zur Aufnahme von Versorgungsleitungen, die zu Zwecken der Platzeinsparung und des Schutzes innerhalb des Deichselkörpers 2, gehalten durch die Halterungen 23, geführt werden. Bei den Versorgungsleitungen kann es sich beispielsweise um elektrische, hydraulische oder pneumatische Versorgungsleitungen handeln.

Zur Montage der Versorgungsleitungen können diese durch den Längsschlitz 20 in den Innenbereich 22 über die gesamte Länge des Deichselkörpers 2 eingeführt werden.

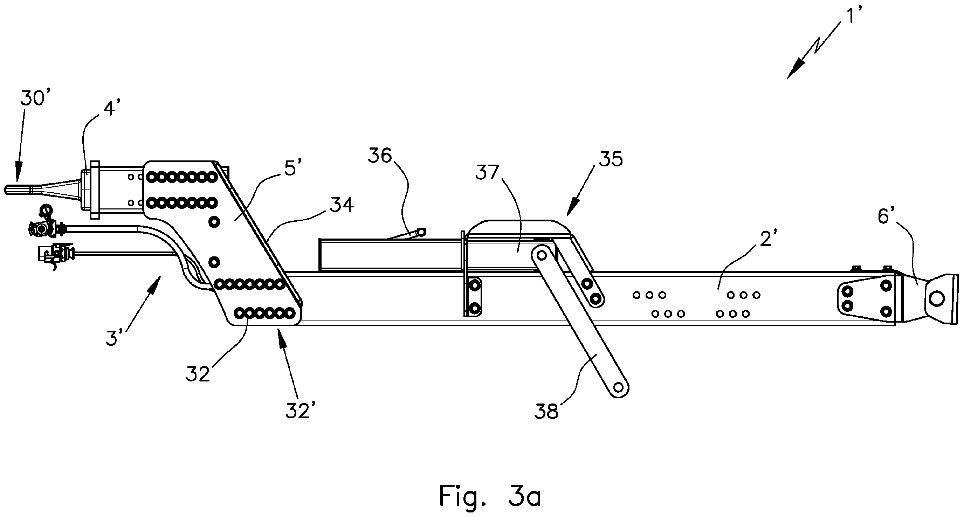

Die Fig. 3a zeigt nun ein zweites Ausführungsbeispiel in Form der Zugdeichsel 1'. Die Zugdeichsel 1' weist analog zur Zugdeichsel 1 einen Deichselkörper 2' auf, an dem eine Fahrzeugkopplungsanordnung 3', umfassend einen Kopplungsabschnitt 4' und einen Verbindungsabschnitt 5', angeordnet ist. An der der Fahrzeugkopplungsanordnung 3' gegenüberliegenden Seite des Deichselkörpers 2' ist ein Zugdeichselanbindungsabschnitt 6' angeflanscht.

In diesem Ausführungsbeispiel weist der Kopplungsabschnitt 4' eine Zugöse 30' auf.

In diesem Ausführungsbeispiel ergibt sich eine Höhen- und Längenverstellbarkeit der Fahrzeugkopplungsanordnung 3' über Lochbilder 32 und 32' des Verbindungsabschnitts 5' bzw. des Deichselkörpers 2'. Die Lochbilder 32, 32' sind dazu analog zu den Lochbildern 10, 10' (Fig. 1) gebildet.

Ferner weist der Verbindungsabschnitt 5' Verstärkungselemente 34 auf. Die Verstärkungselemente 34 sind in diesem Ausführungsbeispiel durch Abkanten von Seitenteilen des Verbindungsabschnitts 5' hergestellt. Durch die Verstärkungselemente 34 wird die Verwindungssteifigkeit des Verbindungselements 5' verbessert.

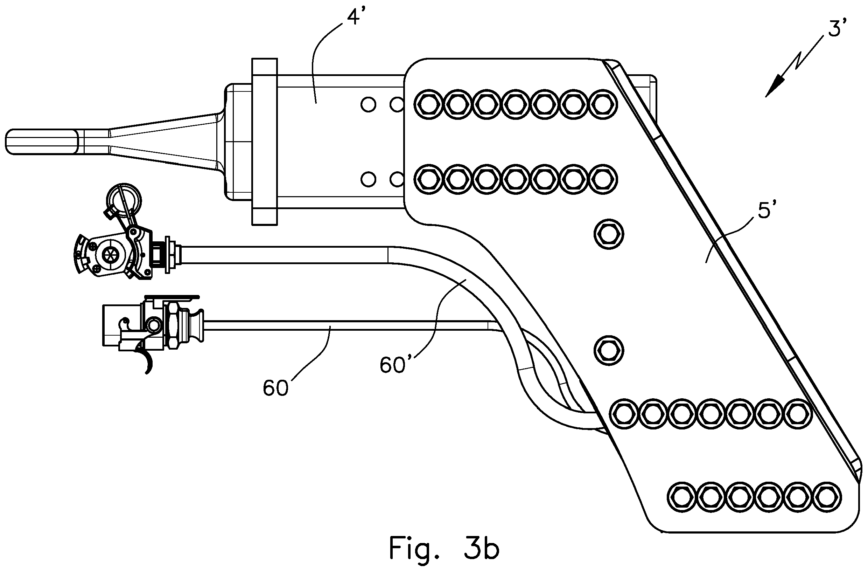

Die Fig. 3b zeigt eine Detailansicht der Fahrzeugkopplungsanordnung 3' der Fig. 3a mit dem Kopplungsabschnitt 4' und dem Verbindungsabschnitt 5'. Zu erkennen sind insbesondere an ein Zugfahrzeug ankoppelbare und in dem Deichselkörper 2' (Fig. 3a) weitergeführte Hydraulikleitungen 60, 60'.

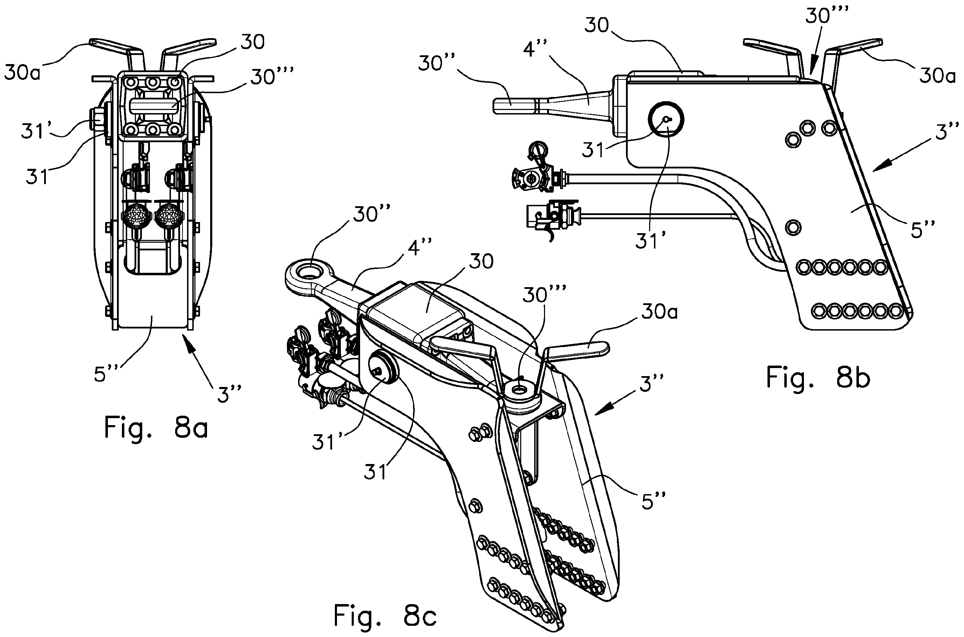

Die Fahrzeugkopplungsanordnung 3' lässt sich problemlos gegen eine alternativ ausgebildete Fahrzeugkopplungsanordnung austauschen und jeweils alternativ am Deichselkörper 2' (Fig. 3a) festlegen. Somit kann die Zugdeichsel 1' modular aufgebaut bzw. zusammengesetzt werden. Ein hierzu geeignetes alternatives Ausführungsbeispiel einer Fahrzeugkopplungsanordnung wird weiter unten in Bezug auf die Fig. 8a bis 8c beschrieben.

Die konkrete Auswahl einer Fahrzeugkopplungsanordnung 3' bzw. eines Kopplungsabschnitts 4' bzw. eines Verbindungsabschnitts 5' erfolgt dabei in Abhängigkeit von einer Anhängevorrichtung, an die die Zugdeichsel 1' angehängt werden soll. Eine Feinanpassung kann durch Höhen- und/oder Längeneinstellung, insbesondere mittels der jeweiligen Lochbilder, erfolgen.

Eine weitere Anpassungsmöglichkeit bietet die Zugdeichsel 1' in Form einer Höhenverstelleinrichtung 35 (Fig. 3a). Die Höhenverstelleinrichtung 35 ermöglicht eine Einstellung der relativen Lage des Deichselkörpers 2' zu einem (nicht näher dargestellten) Anhängerrahmen des Fahrzeuganhängers, mit dem die Zugdeichsel 1' verwendet wird.

In diesem Ausführungsbeispiel ist die Höhenverstelleinrichtung 35 als horizontal angeordnete Spindel-Höhenverstellung ausgebildet. Über einen Kurbeltrieb 36 kann ein Spindelkolben 37 ein- bzw. ausgefahren werden. Dadurch wird eine mit dem Spindelkolben 37 drehbar verbundene Schubstange 38, an der der Anhängerrahmen drehbar festgelegt ist, verlagert bzw. verdreht. Somit wird der Deichselkörper 2' relativ zum Anhängerahmen je nach Stellung der Höhenverstelleinrichtung 35 angehoben oder abgesenkt.

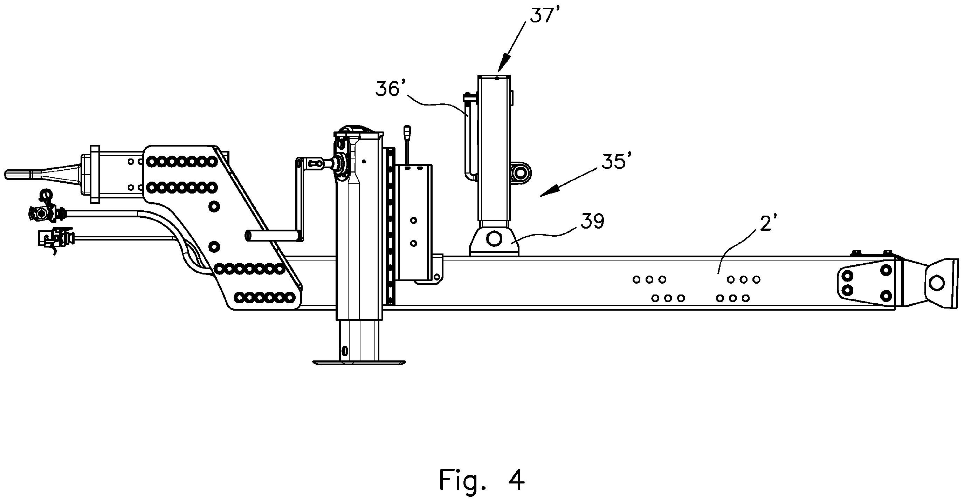

Die Fig. 4 zeigt eine alternative Ausführungsform einer Höhenverstelleinrichtung 35' zur Verwendung am Deichselkörper 2'. Die Höhenverstelleinrichtung 35' ist ebenfalls als Spindel-Höhenverstellung mit einem Kurbeltrieb 36' und einem Spindelkolben 37' ausgebildet. Im Unterschied zur Höhenverstellung 35 der Fig. 3 ist die Höhenverstellung 35' im Wesentlichen vertikal ausgerichtet. Dazu ist die Höhenverstelleinrichtung 35' oberseitig am Deichselkörper 2' über ein Fußteil 39 befestigt. Dabei dient das Fußteil 39 zur drehbaren Lagerung der übrigen Höhenverstelleinrichtung 35'. Ein Anhängerrahmen kann in diesem Ausführungsbeispiel direkt mit dem Spindelkolben 37' vorzugsweise drehbar verbunden werden.

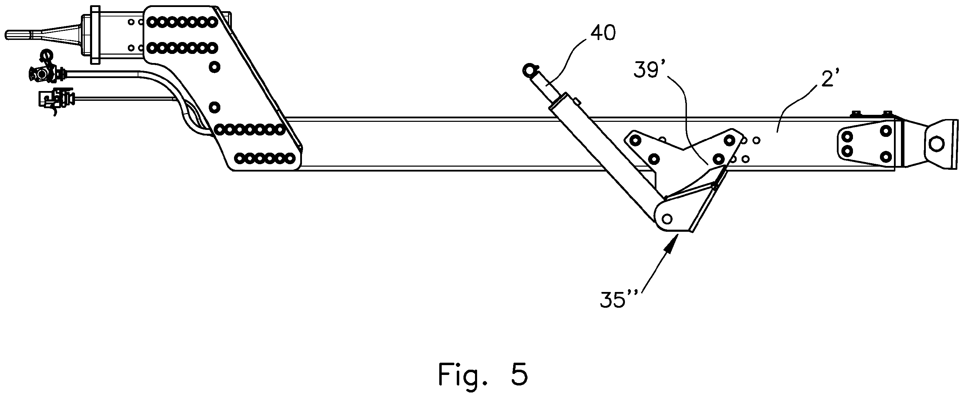

Ein weiteres Ausführungsbeispiel einer alternativen Höhenverstelleinrichtung 35" zur Verwendung am Deichselkörper 2' zeigt ferner die Fig. 5. Die Höhenverstelleinrichtung 35" ist über ein Fußteil 39' an der Deichsel 2' angeflanscht. Die Höhenverstelleinrichtung 35" weist einen Hydraulikkolben 40 auf, an dem einenends ebenfalls ein Anhängerrahmen drehbar fixierbar ist. Somit kann die Höhenverstellung in diesem Ausführungsbeispiel mittels der Höhenverstelleinrichtung 35" hydraulisch erfolgen.

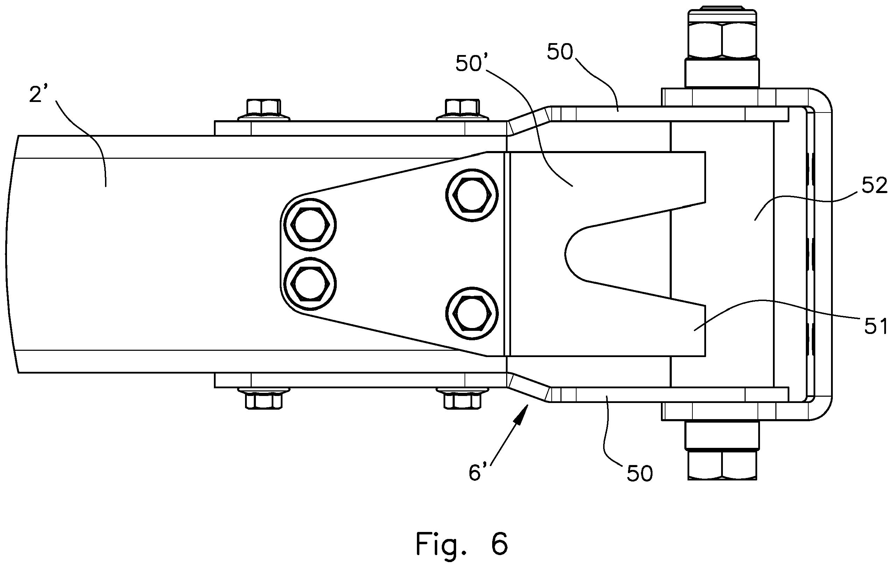

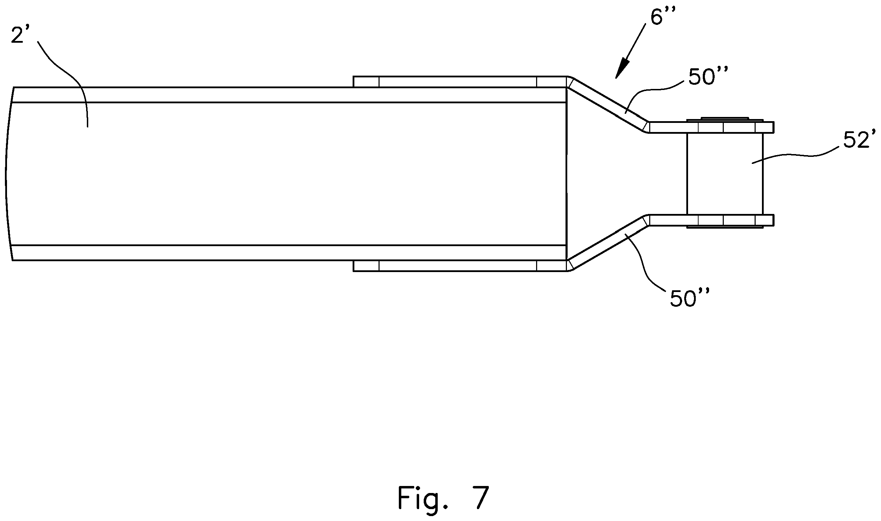

Anhand der Fig. 6 und 7 soll nun der Zugdeichselanbindungsabschnitt 6' (Fig. 1) näher dargestellt werden.

Dazu zeigt die Fig. 6 eine Aufsicht auf ein Ende des Deichselkörpers 2' mit dem Zugdeichselanbindungsabschnitt 6'.

Bei dem Zugdeichselanbindungsabschnitt 6' ist zu erkennen, dass zwei Halteplatten 50 und eine zu den Halteplatten 50 senkrecht angeordnete Halteplatte 50' eine Silentbuchse 52 fixieren. Insbesondere zur Stabilisierung gegenüber Querkräften weist dazu die Halteplatte 50' einen schwalbenschwanzförmigen Abschnitt 51 auf, der mit seinen beiden Enden an der Silentbuchse 52 angeschweißt ist. Im Ausführungsbeispiel gemäß der Fig. 6 weisen die Halteplatten 50 vom Deichselkörper 2' weg gerichtete Kröpfungen auf, um die Silentbuchse 52, deren Länge länger ist als die Breite des Deichselkörpers 2', verdrehgesichert zu fixieren.

Die Fig. 7 zeigt dagegen einen alternativen Zugdeichselanbindungsabschnitt 6", bei dem eine Silentbuchse 52' kürzer als die Breite des Deichselkörpers 2' ist. Daher weisen Halteplatten 50" zur Fixierung der Silentbuchse 52' eine nach innen gerichtete Kröpfung auf.

Im Ausführungsbeispiel der Fig. 6 weist die Silentbuchse 52 eine Länge von 200 mm auf, wohingegen im Ausführungsbeispiel der Fig. 7 die Silentbuchse 52' eine Länge von 100 mm aufweist.

Die Fig. 8a bis 8c zeigen drei perspektivische Ansichten einer Fahrzeugkopplungsanordnung 3" mit einem Kopplungsabschnitt 4", der als Wendeöse 30 ausgebildet ist. Die Wendeöse 30 weist zwei Zugösen 30", 30'" auf. Die Zugöse 30" weist einen Innendurchmesser von 50 mm und die Zugöse 30'" einen Innendurchmesser von 40 mm auf.

Die Wendeöse 30 bzw. der Kopplungsabschnitt 4' ist in diesem Ausführungsbeispiel über eine Bolzenbuchse 31 mittels eines Bolzens 31' an einem Verbindungabschnitt 5" festlegbar.

Je nach Anhängevorrichtung, an die die Fahrzeugkopplungsanordnung 3" angehängt werden soll, kann die jeweils geeignete Zugöse 30" bzw. 30"' gewählt werden. Dazu kann mittels eines Griffs 30a der Wendeöse 30 diese vom übrigen Kopplungsabschnitt 4" gelöst und die jeweils geeignete Zugöse 30" bzw. 30'" durch Schwenken um die Bolzenbuchse 31 ausgewählt und wieder mittels des Griffs 30a am übrigen Kopplungsabschnitt 4' festgelegt werden.

Insbesondere durch die vielfältigen Anpassungsmöglichkeiten im Bereich der Fahrzeugkopplungsanordnung 3, 3' bzw. 3", der Höhenverstelleinrichtungen 35, 35', 35" sowie der Zugdeichselanbindungsabschnitte 6, 6' bzw. 6" können somit modular und hoch flexibel Zugdeichseln ausgebildet werden. Insbesondere können selbst bereits bestehende Anhänger mit erfindungsgemäßen Zugdeichseln nachträglich noch an unterschiedliche Zugfahrzeuge bzw. deren Anhängevorrichtungen flexibel angepasst werden. Auf einen Austausch des Anhängers, beispielsweise wegen eines Wechsels des Zugfahrzeugs, kann verzichtet werden.

### Bezugszeichenliste

- 1, 1': Zugdeichsel
- 2, 2': Deichselkörper
- 3, 3', 3": Fahrzeugkopplungsanordnung
- 4, 4', 4": Kopplungsabschnitt
- 5, 5', 5": Verbindungsabschnitt
- 6, 6', 6": Zugdeichselanbindungsabschnitt
- 7: Stützfußhalterung
- 10, 10', 10", 10'",32, 32': Lochbild
- 20: Längsschlitz
- 21: Abkantung
- 22: Innenbereich
- 23: Halterungen
- 30: Wendeöse
- 30', 30", 30'": Zugöse
- 30a: Griff
- 31: Bolzenbuchse
- 31': Bolzen
- 34: Verstärkungselement
- 35, 35', 35": Höhenverstelleinrichtung
- 36, 36': Kurbeltrieb
- 37, 37': Spindelkolben
- 38: Schubstange
- 39, 39': Fußteil
- 40: Hydraulikkolben
- 41: Stützfuß
- 50, 50', 50": Halteplatte
- 51: Abschnitt
- 52, 52': Silentbuchse
- 60, 60': Hydraulikleitung
- II: Schnittlinie

## Patentansprüche

1. Zugdeichsel (1, 1') für einen Fahrzeuganhänger mit einem Deichselkörper (2, 2') und einer Fahrzeugkopplungsanordnung (3, 3', 3") zur Kopplung des Fahrzeuganhängers mit einem Zugfahrzeug, die lösbar an dem Deichselkörper (2, 2') festlegbar ist, wobei die Fahrzeugkopplungsanordnung (3, 3', 3") einen Verbindungsabschnitt (5, 5', 5"), der an dem Deichselkörper (2, 2') festlegbar ist, und einen Kopplungsabschnitt (4, 4', 4") aufweist und wobei durch Verwendung von Schrauben zur Festlegung des Kopplungsabschnitts (4, 4', 4") am Verbindungsabschnitt (5, 5', 5") und des Verbindungsabschnitts (5, 5', 5") am Deichselkörper (2, 2') der Kopplungsabschnitt (4, 4', 4") und der Verbindungsabschnitt (5, 5', 5") jeweils lösbar am jeweiligen anderen Element (5, 5', 5" bzw. 2, 2') festlegbar sind, wobei die Fahrzeugkopplungsanordnung (3, 3', 3") höhenverstellbar am Deichselkörper (2, 2') festlegbar ist,
**dadurch gekennzeichnet,**
**dass** am Deichselkörper (2, 2') eine Höhenverstelleinrichtung (35, 35', 35") zur Höheneinstellung der Fahrzeugkopplungsanordnung (3, 3', 3") relativ zu einem Anhängerrahmen angeordnet ist.

2. Zugdeichsel nach Anspruch 1, **dadurch gekennzeichnet, dass** die Fahrzeugkopplungsanordnung (3, 3', 3") längenverstellbar an dem Deichselkörper (2, 2') festlegbar ist.

3. Zugdeichsel nach einem der vorhergehenden Ansprüche, **dadurch gekennzeichnet**, der Kopplungsabschnitt (4, 4', 4") höhen- und/oder längenverstellbar an dem Verbindungsabschnitt (5, 5', 5") festlegbar, vorzugsweise lösbar festlegbar, ist.

4. Zugdeichsel nach einem der vorhergehenden Ansprüche, **dadurch gekennzeichnet, dass** der Kopplungsabschnitt (4, 4', 4") am Verbindungsabschnitt (5, 5', 5") und/oder der Verbindungsabschnitt (5, 5', 5") am Deichselkörper (2, 2') über jeweils ein Lochbild (10, 10', 10", 10"', 32, 32') festlegbar sind.

5. Zugdeichsel nach Anspruch 4, **dadurch gekennzeichnet, dass** wenigstens ein Lochbild (10, 10', 10", 10"', 32, 32') in seiner Einbaulage wenigstens zwei zueinander vertikal versetzte Löcher aufweist.

6. Zugdeichsel nach einem der vorhergehenden Ansprüche, **dadurch gekennzeichnet, dass** der Deichselkörper (2, 2') als längsseitig abgekantetes Blechteil mit einem, vorzugsweise unterseitigen, Längsschlitz (20) ausgebildet ist.

7. Zugdeichsel nach einem der vorhergehenden Ansprüche, **dadurch gekennzeichnet, dass** sich der Deichselkörper (2, 2') entlang seiner Längsrichtung zumindest in einem Abschnitt, vorzugsweise von der Fahrzeugkopplungsanordnung (3, 3', 3") weg gerichtet, verjüngt.

8. Zugdeichsel nach einem der vorhergehenden Ansprüche, **dadurch gekennzeichnet, dass** der Verbindungsabschnitt (5, 5', 5") wenigstens ein, vorzugsweise angeschweißtes, angeflanschtes und/oder abgekantetes, Verstärkungselement (34) aufweist.

9. Zugdeichsel nach einem der vorhergehenden Ansprüche, **dadurch gekennzeichnet, dass** der Deichselkörper (2, 2') an dem der Fahrzeugkopplungsanordnung (3, 3', 3") abgewandten Ende einen Zugdeichselanbindungsabschnitt (6, 6', 6") zur Anbindung des Anhängerrahmens an den Deichselkörper (2, 2') aufweist.

10. Zugdeichsel nach Anspruch 9, **dadurch gekennzeichnet, dass** der Zugdeichselanbindungsabschnitt (6, 6', 6") eine Silentbuchse (52, 52') aufweist.

11. Zugdeichsel nach Anspruch 10, **dadurch gekennzeichnet, dass** die Silentbuchse (52, 52') mittels wenigstens zweier zueinander winklig, vorzugsweise rechtwinklig, angeordneter Halteplatten (50, 50', 50") und/oder -vorsprüngen am Zugdeichselanbindungsabschnitt (6, 6', 6") festgelegt ist.

12. Zugdeichsel nach einem der vorhergehenden Ansprüche, **dadurch gekennzeichnet, dass** am Deichselkörper (2, 2') eine Stützfußhalterung (7) vorgesehen, vorzugsweise angeflanscht, ist.

13. Zugdeichsel nach einem der vorhergehenden Ansprüche, **dadurch gekennzeichnet, dass** im Deichselkörper (2, 2') wenigstens eine Versorgungsleitung, beispielsweise eine Druckluftleitung und/oder eine Stromleitung, und/oder wenigstens ein Drucklufttank angeordnet sind.

## Claims

1. Drawbar (1, 1') for a vehicle trailer, comprising a drawbar body (2, 2') and
a vehicle coupling arrangement (3, 3', 3") for coupling the vehicle trailer to a towing vehicle, which arrangement can be detachably secured to the drawbar body (2, 2'), the vehicle coupling arrangement (3, 3', 3") having a connecting portion (5, 5', 5"), which can be secured to the drawbar body (2, 2'), and
a coupling portion (4, 4', 4"), and it being possible, by using screws in order to secure the coupling portion (4, 4', 4") to the connecting portion (5, 5', 5") and
the connecting portion (5, 5', 5") to the drawbar body (2, 2'), for the coupling portion (4, 4', 4") and
the connecting portion (5, 5', 5") to be detachably secured in each case to the relevant other element (5, 5', 5" or 2, 2'), it being possible for the vehicle coupling arrangement (3, 3', 3") to be secured to the drawbar body (2, 2') in a height-adjustable manner, **characterized in that**
a height adjustment device (35, 35', 35") for adjusting the height of the vehicle coupling arrangement (3, 3', 3") relative to a trailer frame is arranged on the drawbar body (2, 2').

2. Drawbar according to claim 1, **characterized in that** the vehicle coupling arrangement (3, 3', 3") can be secured to the drawbar body (2, 2') in a length-adjustable manner.

3. Drawbar according to either of the preceding claims, **characterized in that** the coupling portion (4, 4', 4") can be secured, preferably detachably secured, to the connecting portion (5, 5', 5") in a height-adjustable and/or length-adjustable manner.

4. Drawbar according to any of the preceding claims, **characterized in that** the coupling portion (4, 4', 4") can be secured to the connecting portion (5, 5', 5") and/or the connecting portion (5, 5', 5") can be secured to the drawbar body (2, 2') in each case by means of a hole pattern (10, 10', 10", 10'", 32, 32').

5. Drawbar according to claim 4, **characterized in that** at least one hole pattern (10, 10', 10", 10'", 32, 32') has at least two holes which are vertically offset from one another in its mounting position.

6. Drawbar according to any of the preceding claims, **characterized in that** the drawbar body (2, 2') is formed as a panel which is folded longitudinally and has a longitudinal slot (20), preferably on the underside.

7. Drawbar according to any of the preceding claims, **characterized in that** the drawbar body (2, 2') tapers along its longitudinal direction at least in one portion, preferably directed away from the vehicle coupling arrangement (3, 3', 3").

8. Drawbar according to any of the preceding claims, **characterized in that** the connecting portion (5, 5', 5") has at least one, preferably welded, flanged and/or folded, reinforcing element (34).

9. Drawbar according to any of the preceding claims, **characterized in that** the drawbar body (2, 2') has a drawbar attaching portion (6, 6', 6"), for attaching the trailer frame to the drawbar body (2, 2'), at the end remote from the vehicle coupling arrangement (3, 3', 3").

10. Drawbar according to claim 9, **characterized in that** the drawbar attaching portion (6, 6', 6") has a silent bushing (52, 52').

11. Drawbar according to claim 10, **characterized in that** the silent bushing (52, 52') is secured to the drawbar attaching portion (6, 6', 6") by means of at least two holding plates (50, 50', 50") and/or projections which are arranged at an angle to one another, preferably at a right angle to one another.

12. Drawbar according to any of the preceding claims, **characterized in that** a support foot holder (7) is provided, preferably flanged, on the drawbar body (2, 2').

13. Drawbar according to any of the preceding claims, **characterized in that** at least one supply line, for example a compressed air line and/or a power line, and/or at least one compressed air tank are arranged in the drawbar body (2, 2').

## Revendications

1. Timon (1, 1') pour une remorque de véhicule, comportant un corps de timon (2, 2'), et un système d'attelage de véhicule (3, 3', 3") pour l'attelage de la remorque de véhicule à un véhicule tracteur, lequel système peut être fixé de manière amovible au corps de timon (2, 2'), dans lequel le système d'attelage de véhicule (3, 3', 3") présente une section de raccordement (5, 5', 5") qui peut être fixée sur le corps de timon (2, 2'), et une section d'attelage (4, 4', 4"), et dans lequel la section d'attelage (4, 4', 4") et la section de raccordement (5, 5', 5") peuvent chacune être fixées de manière amovible à l'autre élément respectif (5, 5', 5" ou 2, 2'), en utilisant des vis pour la fixation de la section d'attelage (4, 4', 4") sur la section de raccordement (5, 5', 5") et de la section de raccordement (5, 5', 5") sur le corps de timon (2, 2'), dans lequel le système d'attelage de véhicule (3, 3', 3") est fixé de manière réglable en hauteur sur le corps de timon (2, 2'), **caractérisé en ce qu'**un dispositif de réglage en hauteur (35, 35', 35") pour le réglage en hauteur du système d'attelage de véhicule (3, 3', 3") par rapport à un châssis de remorque est disposé sur le corps de timon (2, 2').

2. Timon selon la revendication 1, **caractérisé en ce que** le système d'attelage de véhicule (3, 3', 3") peut être fixé de manière réglable en longueur sur le corps de timon (2, 2').

3. Timon selon l'une des revendications précédentes, **caractérisé en ce que** la section d'attelage (4, 4', 4") peut être fixée de manière réglable en hauteur et/ou en longueur, peut de préférence être fixée de manière amovible, sur la section de raccordement (5, 5', 5").

4. Timon selon l'une des revendications précédentes, **caractérisé en ce que** la section d'attelage (4, 4', 4") peut être fixée sur la section de raccordement (5, 5', 5") et/ou la section de raccordement (5, 5', 5") peut être fixée sur le corps de timon (2, 2'), chacune pouvant être fixée via une configuration de trous (10, 10', 10", 10'", 32, 32').

5. Timon selon la revendication 4, **caractérisé en ce qu'**au moins une configuration de trous (10, 10', 10", 10'", 32, 32') présente, dans sa position de montage, au moins deux trous décalés verticalement l'un par rapport à l'autre.

6. Timon selon l'une des revendications précédentes, **caractérisé en ce que** le corps de timon (2, 2') est réalisé sous la forme d'une pièce en tôle pliée longitudinalement comportant une fente longitudinale (20), de préférence sur la face inférieure.

7. Timon selon l'une des revendications précédentes, **caractérisé en ce que** le corps de timon (2, 2') se rétrécit le long de son sens longitudinal au moins dans une section, de préférence à distance du système d'attelage de véhicule (3, 3', 3").

8. Timon selon l'une des revendications précédentes, **caractérisé en ce que** la section de raccordement (5, 5', 5") présente au moins un élément de renfort (34) de préférence soudé, bridé et/ou plié.

9. Timon selon l'une des revendications précédentes, **caractérisé en ce que** le corps de timon (2, 2') présente, à l'extrémité opposée au système d'attelage de véhicule (3, 3', 3"), une section de liaison de timon (6, 6', 6") pour la liaison du châssis de remorque sur le corps de timon (2, 2').

10. Timon selon la revendication 9, **caractérisé en ce que** la section de liaison de timon (6, 6', 6") présente un manchon de support élastique (52, 52').

11. Timon selon la revendication 10, **caractérisé en ce que** le manchon de support élastique (52, 52') est fixé, sur la section de liaison de timon (6, 6', 6"), au moyen d'au moins deux plaques et/ou saillies de maintien (50, 50', 50") disposées en inclinaison l'une par rapport à l'autre, de préférence selon un angle droit.

12. Timon selon l'une des revendications précédentes, **caractérisé en ce qu'**un support de pied d'appui (7) est prévu, de préférence bridé sur le corps de timon (2, 2').

13. Timon selon l'une des revendications précédentes, **caractérisé en ce qu'**au moins une ligne d'alimentation, par exemple une ligne d'air comprimé et/ou une ligne électrique, et/ou au moins un réservoir d'air comprimé sont disposés dans le corps de timon (2, 2').
